# EUROPÄISCHE PATENTSCHRIFT

(11) **EP 1 104 192 B1**
(45) Veröffentlichungstag und Bekanntmachung des Hinweises auf die Patenterteilung: **17.10.2012**
(21) Anmeldenummer: 00204063.2
(22) Anmeldetag: 17.11.2000
(51) Int. Cl.: H04N 7/035, H04L 7/033

(54) **Anordnung zur Rückgewinnung von Datenbits eines Datensignals**
Arrangement for recovering data bits of a data signal
Dispositif pour la récupération des bits de données d'un signal de données

(30) Priorität: 26.11.1999 DE 19956937
(43) Veröffentlichungstag der Anmeldung: 30.05.2001
(73) Patentinhaber: Trident Microsystems (Far East) Ltd., Grand Cayman (KY)
(72) Erfinder: Seeliger, Rolf, Philips Corp. Intel. Prop. GmbH, 52064 Aachen (DE)
(74) Vertreter: Epping - Hermann - Fischer

(56) Entgegenhaltungen:
- US-A- 5 555 025

## Beschreibung

Die Erfindung betrifft eine Anordnung zur Rückgewinnung von Datenbits eines Datensignals, das in Form digitaler Abtastwerte vorliegt und dem die Datenbits mit bekannter Modulationsfrequenz asynchron aufmoduliert sind, wobei der Anordnung ein Phasensignal zugeführt wird, welches die Phasenlage der Datenbits des abgetasteten Datensignals relativ zu einem vorgegebenen Startpunkt liefert.

Bei einem derartigen Datensignal, welches Datenbits aufweist, die mit einer bestimmten Modulationsfrequenz asynchron aufmoduliert sind, kann es sich beispielsweise um ein Teletextsignal handeln. Ein solches Teletextsignal tritt in bestimmten Bildzeilen eines Videosignals auf. Seine Modulationsfrequenz ist zwar bekannt, nicht jedoch die Phasenlage der Datenbits des Teletextsignals innerhalb der Fernsehzeilen. Diese Phasenlage kann jedoch durch eine Anordnung, die nicht Gegenstand der Erfindung ist, festgestellt werden und in ein entsprechendes Phasensignal generiert werden, welches die Phasenlage der Datenbits angibt. Es wird ferner davon ausgegangen, dass das Datensignal, also beispielsweise das Teletextsignal, in abgetasteter Form vorliegt, also in Form einzelner digitaler Abtastwerte.

Aus der US-PS 5,555,025 ist eine Anordnung zur Decodierung von Daten in dem vertikal blanking interval, das in Fernsehsignalen üblicherweise auftritt, bekannt, bei welcher auf relativ aufwendigem Wege festgestellt wird, um welche Art von Daten im Signal es sich handelt, welche Frequenz und welche Phasenlage dieses Signal hat. Es wird dann ein Takt generiert, der so gestaltet ist, dass bereits die Abtastung des analogen Datensignals in synchronisierter Form zur Phasenlage der Bits stattfindet. Die Abtastfrequenz richtet sich dort also nach der Modulationsfrequenz bzw. der Phasenlage der Datenbits. Diese Vorgehensweise ist sehr aufwendig und in vielen Empfängerkonzepten auch nicht sinnvoll zu verwirklichen, da hier die Abtastfrequenz variiert werden muß und nicht, wie dies normalerweise sinnvoll und relativ einfach möglich ist, entweder mit der Farbhilfsträgerfrequenz oder mit der Zeilenfrequenz des Videosignals verkoppelt sein kann.

Es ist Aufgabe der Erfindung, eine Anordnung der eingangs genannten Art anzugeben, welche einerseits nicht auf eine Verkoppelung der Abtastfrequenz mit der Phasenlage und/oder der Modulationsfrequenz der Datenbits des Datensignals angewiesen ist und welche andererseits einen geringen Aufwand erfordert. Ferner sollen wenigstens Elemente der Anordnung auch softwaremäßig realisierbar sein.

Diese Aufgabe ist erfindungsgemäß dadurch gelöst, dass die Anordnung Mittel aufweist, welche aus dem Phasensignal und der bekannten Modulationsfrequenz der Datenbits die Positionen der rückzugewinnenden Datenbits bestimmen,
dass die Anordnung Mittel aufweist, welche für jedes rückzugewinnende Datenbit feststellen, ob dessen Position in einem Toleranzfenster vorgegebener Breite um die Position eines Abtastwertes herum liegt, dass die Mittel, sollte dies der Fall sein, den Wert des in dem Toleranzfenster liegenden Abtastwertes für die Rückgewinnung des Datenbits einsetzen
und dass die Mittel in dem Fall, dass die Position eines rückzugewinnenden Datenbits nicht in einem Toleranzfenster um die Position eines Abtastwertes liegt, die beiden Abtastwerte, die der Position des rückzugewinnenden Datenbits beiderseits benachbart positioniert sind, für die Rückgewinnung des Datenbits heranziehen.

Da einerseits die Modulationsfrequenz der Datenbits bekannt ist und andererseits aus dem Phasensignal, das der Anordnung zugeführt wird, die Lage der Datenbits bekannt ist, kann hieraus für jedes einzelne Datenbit dessen Position bestimmt werden. Somit bestimmt die Anordnung aus diesen Informationen diejenigen zeitlichen Positionen, zu denen Datenbits auftreten. Dabei handelt es sich dann jeweils um die zentrale Position eines Datenbits.

Da bei der Erfindung grundsätzlich davon ausgegangen wird, dass die Abtastfrequenz nicht mit der Modulationsfrequenz der Datenbits verkoppelt ist, kann nicht davon ausgegangen werden, dass diese Positionen der Datenbits exakt mit den Positionen der Abtastwerte übereinstimmen. Tatsächlich wird sogar ein Driften dieser Positionen gegeneinander stattfinden, so dass eine zentrale Position eines Datenbits eher zufällig von der Position eines Abtastwertes getroffen wird.

Es stellt sich also das Problem, wie für die festgestellten Positionen der Datenbits geeignete Abtastwerte herangezogen werden können. Die erfindungsgemäße Anordnung löst dieses Problem dadurch, dass von Toleranzfenstern ausgegangen wird, die um die Positionen der Abtastwerte herum liegen. Diese Toleranzfenster können mit vorgegebener Größe gewählt werden, können aber auch variabel sein.

Es wird nun für jedes rückzugewinnende Datenbit, dessen Position bestimmt wurde, festgestellt, ob diese Position in einem Toleranzfenster um die Position eines Abtastwertes herum liegt. Ist dies der Fall, so kann davon ausgegangen werden, dass der Wert des Abtastwertes in dessen Toleranzfenster das rückzugewinnende Datenbit liegt, dem tatsächlichen gewünschten Wert des Datenbits sehr nahe kommt. Dies ist auch deshalb möglich, weil aufgrund des sinusförmigen Verlaufes derartiger Signale die Differenz dieser beiden Werte sehr gering sein wird, da sie im Bereich eines Maximums bzw. eines Minimums liegen, in dem der Verlauf einer Sinuskurve einen relativ flachen Verlauf hat.

Fällt also die Position eines rückzugewinnenden Datenbits in ein Toleranzfenster um die Position eines Abtastwertes, so wird der Wert dieses Abtastwertes für die Bestimmung des rückzugewinnenden Bits herangezogen.

Im umgekehrten Fall, in dem die Position eines rückzugewinnenden Datenbits nicht in einem Toleranzfenster um die Position eines Abtastwertes liegt, besteht diese Möglichkeit sinnvollerweise so unmittelbar nicht. Statt dessen werden dann die beiden Abtastwerte, die beiderseits der Position des rückzugewinnenden Datenbits liegen, für die Rückgewinnung des Datenbits eingesetzt. Diese beiden Abtastwerte werden sich relativ stark dem Wert des gesuchten rückzugewinnenden Datenbits annähern und können daher sinnvoll für die Bestimmung des rückzugewinnenden Datenbits eingesetzt werden. Aufgrund der kalkulierten Phasenlage wird auf weitere Stützstellen zwischen den originalen Abtastwerten zurückgegriffen. Die Stützstellen können auf einfache Weise interpoliert werden.

Der wesentliche Vorteil dieser erfindungsgemäßen Anordnung besteht darin, dass ihre Arbeitsweise sehr einfach ist. Unabhängig davon, ob hardwaremäßig oder softwaremäßig realisiert, bedarf die Bestimmung der rückzugewinnenden Datenbits bzw. von deren Wert nur einen sehr geringen Aufwands, da entweder vorhandene Abtastwerte unmittelbar übernommen werden können, oder aus zwei Abastwerten ein solches rückzugewinnendes Datenbit bestimmt wird. Der Rechenaufwand und der Speicherzugriff sind also gering. Die Anordnung stellt ferner keinerlei Ansprüche an die Wahl der Abtastfrequenz, außer natürlich der Einhaltung des Nyquist-Kriteriums. Insbesondere kann diese unverkoppelt mit allen anderen Frequenzen, also beispielsweise der Modulationsfrequenz, sein. Somit ist die Anordnung einerseits sehr störunempfindlich und andererseits universell einsetzbar.

Eine Ausgestaltung der Erfindung gemäß Anspruch 2 sieht vor, dass in dem Falle, dass die Position eines rückzugewinnenden Datenbits nicht in einem Toleranzfenster um die Position eines Abtastwertes liegt, die beiden Abtastwerte, die wie oben erläutert beiderseits der Position des rückzugewinnenden Datenbits liegen, in der Weise für die Rückgewinnung des Datenbits eingesetzt werden, dass aus den beiden Abtastwerten entsprechend der Phasenlage ein neuer Stützwert gebildet wird, der als Wert für das rückzugewinnende Datenbit angesetzt wird und aus dem das Datenbit bestimmt werden kann. Es ist hierzu ein minimaler Rechenaufwand erforderlich, da lediglich Additionen und Divisionen durch 2ⁿ erforderlich sind, wobei die Division durch 2ⁿ im binären System durch einen einfachen Shift zu realisieren ist.

Zur weiteren Verbesserung der Erkennungssicherheit können, wie gemäß einer weiteren Ausgestaltung der Erfindung nach Anspruch 4 vorgesehen ist, adaptive Schneidepegel vorgesehen sein. Diese Schneidepegel dienen dazu, für die Erkennung der rückzugewinnenden Datenbits die Aussage zu gewinnen, welchen Wert diese haben. Wird ein bestimmter Schneidepegel überschritten, so handelt es sich um einen logischen ersten Wert, wird ein anderer Schneidepegel unterschritten, so handelt es sich um einen logischen zweiten Wert. Die adaptive Gestaltung der Schneidepegel kann sich vorzugsweise an den Maximalamplituden der Abtastwerte orientieren. Auf diese Weise können beispielsweise eventuelle DC-Drifts bei der Wahl der Werte der Schneidepegel berücksichtigt werden.

Wie nach einer weiteren Ausgestaltung der Erfindung gemäß Anspruch 5 vorgesehen ist, kann vorteilhaft die Breite der Toleranzbänder adaptiv gestaltet werden, wobei die Breite je nach gewünschter Erkennungssicherheit eingestellt werden kann. Handelt es sich bei dem Datensignal um ein solches, welches eine Fehlerkorrektur enthält, so kann auch anhand der auftretenden Fehler bei der Auswertung der erkannten Datenbits des Datensignals festgestellt werden, wie viele Fehler vorliegen. In Abhängigkeit dieser Fehlerhäufigkeit kann dann die Breite des Toleranzbandes so eingestellt werden, dass maximal eine gewünschte Fehlerhäufigkeit auftritt.

Nachfolgend wird ein Ausführungsbeispiel der Erfindung anhand der Zeichnung näher erläutert. Es zeigen:
Fig. 1 eine zeitliche Darstellung eines Datensignals, einiger Abtastwerte des Datensignals sowie der errechneten Bitpositionen der rückzugewinnenden Bits und
Fig. 2 ein Blockschaltbild einer erfindungsgemäßen Anordnung.

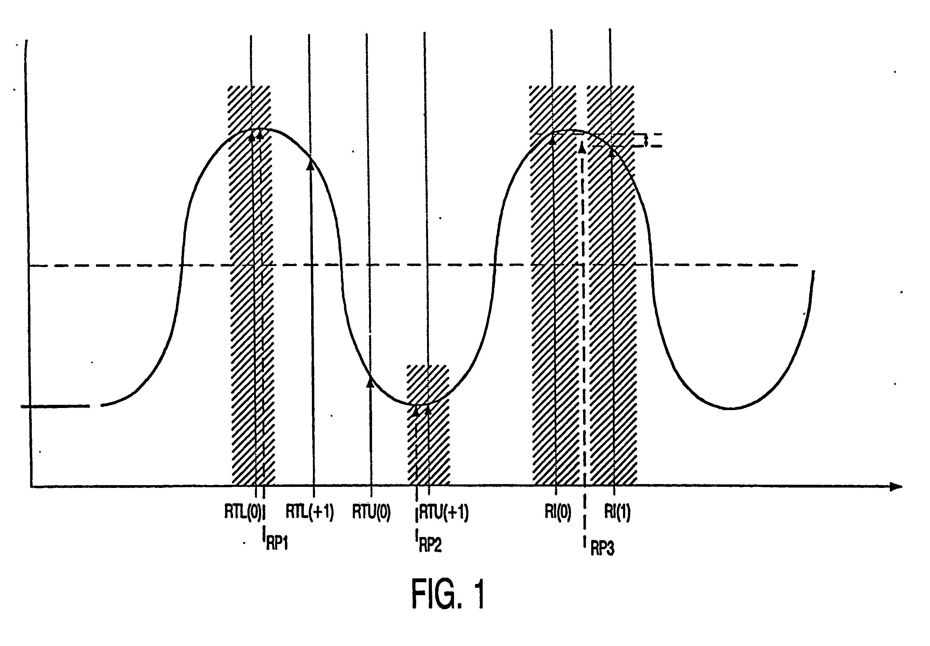

Die Darstellung gemäß Fig. 1 zeigt einige Schwingungszüge eines analogen Datensignals, dem asynchron Datenbits aufmoduliert sind. Dieses analoge Datensignal wird abgetastet, so dass bestimmte Abtastwerte, in der Figur die Abtastwerte RTL(0), RTL(+1), RTU(0), RTU(+1) sowie RI(0) und RI(1) entstehen. Da die Abtastfrequenz nicht mit der Modulationsfrequenz des Datensignals verkoppelt ist und auch zu dieser kein festes Verhältnis aufweisen muß, können die Positionen der Abtastwerte relativ zu den Positionen der Datenbits beliebig liegen bzw. sich auch gegenüber diesen verschieben.

Es besteht somit das Problem, welche der Abtastwerte in welcher Weise für die Bestimmung der Datenbits heranzuziehen sind.

Für die erfindungsgemäße Anordnung wird davon ausgegangen, dass dieser ein Phasensignal zugeführt wird, welches die Phasenlage der Datenbits des Datensignals relativ zu einem beliebigen bekannten Bezugspunkt angibt. Da außerdem die Modulationsfrequenz des Datensignals bekannt ist, ist die Anordnung relativ einfach in der Lage, die Positionen der Datenbits festzustellen. Mit diesen Positionen ist die jeweils zentrale Lage eines Bits gemeint. In der Darstellung gemäß der Fig. 1 ergeben sich für den dort dargestellten Schwingungszug drei Positionen von Datenbits, die in der Figur mit RP1, RP2 und RP3 gekennzeichnet sind. Diese Positionen geben also die Zentren der Datenbits vor. Diese Positionen können auch als virtuelle Resampling-Punkte verstanden werden, da diese Positionen idealer Weise diejenigen Positionen wären, an denen idealer Weise ein Abtastwert vorliegen sollte. Statt jedoch tatsächlich ein Resampling vorzunehmen, was sehr aufwendig ist, versucht die erfindungsgemäße Anordnung die Werte der Datenbits RP1, RP2 und RP3 auf andere Weise möglichst einfach zu ermitteln.

Hierzu stellt die Anordnung für jede Position eines rückzugewinnenden Datenbits fest, ob dieses in einem Toleranzfenster um einen realen Abtastwert herum liegt. Ist dies der Fall, so wird derjenige Abtastwert, in dessen Toleranzfenster die Position des rückzugewinnenden Bits liegt, als Wert für dieses rückzugewinnende Bit angesetzt.

In dem Beispiel gemäß der Fig. 1 ist dies für die ersten beiden dargestellten Datenbits der Fall. Die Position des rückzugewinnenden Datenbits RP1 liegt innerhalb eines in der Figur in schraffierter Form dargestellten Toleranzfensters um einen Abtastwert herum, nämlich um den realen Abtastwert RTL(0) herum. Somit wird als Wert für das rückzugewinnende Datenbit der Abtastwert RTL(0) übernommen.

Entsprechendes gilt für das rückzugewinnende Datenbit RP2, das in einem Toleranzfenster um den Abtastwert RTU(+1) herum liegt, so dass für das rückzugewinnende Datenbit RP2 der Wert des Abtastwertes RTU(+1) übernommen wird.

Es kann jedoch auch der Fall eintreten, dass die Position eines rückzugewinnenden Datenbits nicht in einem Toleranzfenster eines Abtastwertes liegt. In diesem Falle werden für die Bestimmung des Wertes des rückzugewinnenden Datenbits diejenigen beiden Abtastwerte herangezogen, die beiderseits der Position des rückzugewinnenden Datenbits liegen.

Ein solcher Beispielsfall ist in der Fig. 1 für das rückzugewinnende Datenbit RP3 eingetragen. Es ist in der Figur ersichtlich, dass die Position des rückzugewinnenden Datenbits RP3 in keinem Toleranzfenster eines Abtastwertes liegt. Sie liegt vielmehr zwischen den beiden Abtastwerten RI(0) und RI(1). Daher werden zur Bestimmung des Wertes des rückzugewinnenden Datenbits RP3 diese beiden Abtastwerte, die beiderseits der Position des rückzugewinnenden Datenbits RP3 liegen, zur Bestimmung dieses Datenbits herangezogen. Dies kann vorteilhaft in der Weise geschehen, dass aus den beiden Abtastwerten RI(0) und RI(1) einen Mittelwert gebildet wird.

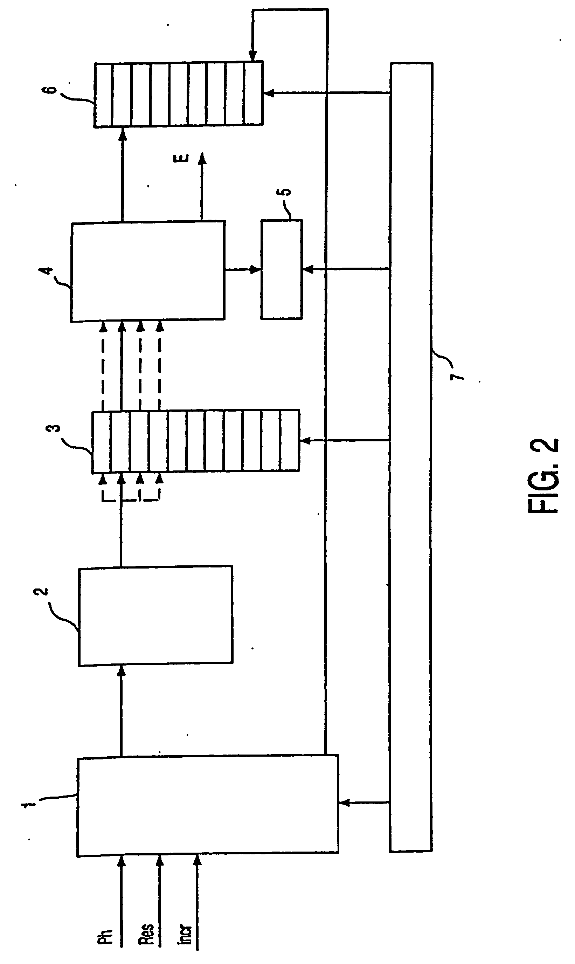

Ein in Fig. 2 dargestelltes Blockschaltbild einer erfindungsgemäßen Anordnung zeigt eine Einheit 1 zur Bitpositionsberechnung. Der Einheit 1 wird ein Phasensignal Ph zugeführt, welches in oben erläuterter Weise die Phasenlage der Datenbits des Datensignals zu einem vorgegebenen Startpunkt angibt. Handelt es sich bei dem Datensignal beispielsweise um ein Teletextsignal, so gibt dieses Phasensignal die Lage der Datenbits innerhalb einer Bildzeile an.

Ferner wird der Einheit 1 zur Bitpositionsberechnung ein Resetsignal Res und ein Incrementsignal Incr zugeführt. Das Resetsignal setzt die gesamte Anordnung zurück, was beispielsweise im Falle eines Teletextsignals zu Beginn jeder Bildzeile geschehen kann. Das Incrementsignal ist ein Taktsignal, das den Arbeitstakt der Anordnung vorgibt.

Innerhalb der Einheit 1 zur Bitpositionsberechnung wird anhand des Phasensignals Ph und der bekannten Modulationsfrequenz des Datensignals bestimmt, welche Positionen die rückzugewinnenden Datenbits haben. In der Darstellung gemäß Fig. 1 sind dies beispielsweise die Positionen der rückzugewinnenden Datenbits RP1, RP2 und RP3.

Die Einheit 1 zur Bitpositionsberechnung gibt diese Positionen an eine Einheit 2 zur Adressenberechnung weiter, welche aus den Werten der Positionen Adressen bestimmt. Diese Adressen beziehen sich auf in einem Eingangspufferspeicher 3 abgelegte reale Abtastwerte. Die Einheit 2 zur Adressenberechnung bestimmt also aus dem von der Einheit 1 gelieferten Signal diejenigen Adressen von Abtastwerten in dem Eingangspufferspeicher 3, die für die Rückgewinnung eines jeweiligen Datenbits relevant sein können. Mittels des Adreßsignals, das die Einheit 2 zur Adressenberechnung abgibt, werden in dem Eingangspufferspeicher 3 die entsprechenden Abtastwerte adressiert. Die Werte dieser adressierten Abtastwerte werden an eine Einheit 4 zur Bitwertberechnung weitergegeben. Die Einheit 4 ist diejenige Einheit, die die tatsächliche Bestimmung der Bitwerte vornimmt. Die Einheit 4 bestimmt die Toleranzfenster um die von dem Eingangspufferspeicher 3 gelieferten Abtastwerte herum und nimmt die oben erläuterte Entscheidung vor, ob ein Abtastwert unmittelbar übernommen werden kann oder ob aus zwei Abtastwerten ein Mittelwert berechnet wird.

Ferner kann die Einheit 4 auf in einem Tabellenspeicher 5 abgelegte Schwellwerte zugreifen, welche ggf. adaptiv in der Weise eingesetzt werden können, dass die Schwellwerte in Abhängigkeit der Maximalamplitude der Abtastwerte gewählt werden. Es wird also in Abhängigkeit der tatsächlich auftretenden Maximalwerte der Abtastwerte in der Tabelle ein entsprechender Schneidepegel adressiert. Mit Hilfe dieser Schneidepegel kann dann die Entscheidung vorgenommen werden, ob das jeweilige Datenbit einen logischen ersten oder einen logischen zweiten Zustand aufweist.

Die Anordnung 4 zur Bitwertberechnung ist ferner in der Lage, ein Fehlersignal E dann abzugeben, wenn keine hinreichende Zahl von Datenbits erkannt wird, wenn also entweder die Erkennung oder das Datensignal gestört ist.

Die Einheit 4 zur Bitwertberechnung legt die Werte der rückgewonnenen Bits in einem Ausgangspufferspeicher 6 ab, welcher mittels der Einheit 1 zur Bitpositionsberechnung adressierbar ist, so dass die erkannten rückgewonnenen Datenbitwerte aus dem Ausgangspufferspeicher 6 auslesbar sind.

Es ist ferner eine Steuerung 7 vorgesehen, welche eine Steuerung der Gesamtanordnung vornimmt, so dass die oben beschriebenen Vorgänge in gewünschter Weise und Reihenfolge stattfinden.

Sowohl die Darstellung gemäß Fig. 1 wie auch diejenige gemäß Fig. 2 zeigen, dass die Vorgehensweise bei der Erkennung der rückzugewinnenden Datenbits sehr einfach ist und daher einen geringen Aufwand erfordert. Insbesondere ist sie wenigstens teilweise auch leicht softwaremäßig realisierbar. Es liegt dennoch eine hohe Erkennungssicherheit vor, welche darüber hinaus in Grenzen durch die Wahl der Breite der Toleranzfenster einstellbar ist.

## Patentansprüche

1. Anordnung zur Rückgewinnung von Datenbits eines Datensignals, das in Form digitaler Abtastwerte vorliegt und dem die Datenbits mit bekannter Modulationsfrequenz asynchron aufmoduliert sind, wobei der Anordnung ein Phasensignal zugeführt wird, welches die Phasenlage der Datenbits des abgetasteten Datensignals relativ zu einem vorgegebenen Startpunkt liefert,
**dadurch gekennzeichnet,**
**dass** die Anordnung Mittel aufweist, welche aus dem Phasensignal und der bekannten Modulationsfrequenz der Datenbits die Positionen der rückzugewinnenden Datenbits bestimmen,
**dass** die Anordnung Mittel aufweist, welche für jedes rückzugewinnende Datenbit feststellen, ob dessen Position in einem Toleranzfenster vorgegebener Breite um die Position eines Abtastwertes herum liegt, dass die Mittel, sollte dies der Fall sein, den Wert des in dem Toleranzfenster liegenden Abtastwertes für die Rückgewinnung des Datenbits einsetzen
und **dass** die Mittel in dem Fall, dass die Position eines rückzugewinnenden Datenbits nicht in einem Toleranzfenster um die Position eines Abtastwertes liegt, die beiden Abtastwerte, die der Position des rückzugewinnenden Datenbits beiderseits benachbart positioniert sind, für die Rückgewinnung des Datenbits heranziehen.

2. Anordnung nach Anspruch 1,
**dadurch gekennzeichnet,**
**dass** die Mittel in dem Fall, in dem die Position eines rückzugewinnenden Datenbits nicht in einem Toleranzfenster um die Position eines Abtastwertes liegt, aus den beiden Abtastwerten, die der Position des rückzugewinnenden Datenbits beiderseits benachbart positioniert sind, ein neuer Stützwert bilden und für die Rückgewinnung des Datenbits einsetzen.

3. Anordnung nach Anspruch 1,
**dadurch gekennzeichnet,**
**dass** die Toleranzfenster vorzugsweise eine Breite von etwa +/- 20 Grad, bezogen auf eine Periodenlänge von 360 Grad der Datenbits des Datensignals, aufweisen.

4. Anordnung nach Anspruch 1,
**dadurch gekennzeichnet,**
**dass** die Mittel für die Rückgewinnung der Datenbits aus den errechneten oder übernommenen Abtastwerten Amplituden-Schneidepegel einsetzen, welche adaptiv gestaltet sind und deren Amplitudenwerte sich vorzugsweise an den Maximalamplituden der errechneten oder übernommenen Abtastwerte orientieren.

5. Anordnung nach Anspruch 1,
**dadurch gekennzeichnet,**
**dass** die Breite des Toleranzbandes adaptiv gestaltet ist, wobei die Breite des Toleranzbandes je nach gewünschter und/oder festgestellter Erkennungssicherheit eingestellt wird.

6. Anordnung nach Anspruch 1,
**dadurch gekennzeichnet,**
**dass** es sich bei dem Datensignal um ein Teletextsignal eines Videosignals handelt und dass die Abtastfrequenz, mit der das Teletextsignal abgetastet wurde, mit der Zeilenfrequenz des Videosignals verkoppelt ist.

## Claims

1. A device for recovering data bits of a data signal which is present in the form of digital sample values and to which the data bits have been asynchronously modulated with a known modulation frequency, the device being supplied with a phase signal delivering the phasing of the data bits of the sampled data signal relative to a predefined starting point, **characterized in that**
the device comprises means which determine the positions of the data bits, to be recovered, from the phase signal and the known modulation frequency of the data bits,
the device comprises means which detect, for each data bit to be recovered, whether its position lies within a tolerance window of predefined width around the position of a sample value, that the means, should this be the case, use the value of the sample value lying within the tolerance window for recovering the data bit,
and **in that** the means, in case the position of a data bit to be recovered does not lie within a tolerance window around the position of a sample value, use the two sample values for recovering the data bit which are adjacent to both sides of the position of the data bit to be recovered.

2. The device according to claim 1,
**characterized in that**
the means, in case the position of a data bit to be recovered does not lie within a tolerance window around the position of a sample value, form a new support value from the two sample values which are adjacent to both sides of the position of the data bit to be recovered and use this supporting value for recovering the data bit.

3. The device according to claim 1,
**characterized in that**
the tolerance windows preferably have a width of approximately +/-20 degrees related to a periodic length of 360 degrees of the data bits of the data signal.

4. The device according claim 1,
**characterized in that**
the means for recovering the data bit from the calculated or adopted sample values use amplitude cut-off levels which are adaptively configured and have amplitude values which preferably are oriented towards the maximum amplitudes of the calculated or adopted sample values.

5. The device according to claim 1,
**characterized in that**
the width of the tolerance band is adaptively configured and set up depending on the desired and/or established detection reliability.

6. The device according to claim 1,
**characterized in that**
the data signal is a teletext signal of a video signal and **in that** the sampling frequency which has been used for sampling the teletext signal is coupled to the line frequency of the video signal.

## Revendications

1. Dispositif de récupération de bits de données d'un signal de données qui est disponible sous forme d'échantillons numériques et vers lequel les bits de données sont modulés de manière asynchrone à une fréquence de modulation connue, sachant qu'on amène au dispositif un signal de phase qui fournit la position de phase des bits de données du signal de données échantillonné relativement à un point de départ spécifié,
**caractérisé en ce que**
le dispositif présente des moyens qui déterminent les positions des bits de données à récupérer à partir du signal de phase et de la fréquence de modulation connue des bits de données,
**en ce que** le dispositif présente des moyens qui constatent, pour chaque bit de données à récupérer, si sa position est située dans une fenêtre de tolérance de largeur spécifiée autour de la position d'un échantillon et **en ce que** les moyens, le cas échéant, utilisent la valeur de l'échantillon situé dans la fenêtre de tolérance pour la récupération du bit de données,
et **en ce que** les moyens, dans le cas où la position d'un bit de données à récupérer n'est pas située dans une fenêtre de tolérance autour de la position d'un échantillon, prennent pour la récupération du bit de données les deux échantillons qui sont positionnés des deux côtés voisins de la position du bit de données à récupérer.

2. Dispositif selon la revendication 1,
**caractérisé en ce que**
les moyens, dans le cas où la position d'un bit de données à récupérer n'est pas située dans une fenêtre de tolérance autour de la position d'un échantillon, forment une nouvelle valeur de référence à partir des deux échantillons qui sont positionnés des deux côtés voisins de la position du bit de données à récupérer et l'utilisent pour la récupération du bit de données.

3. Dispositif selon la revendication 1,
**caractérisé en ce que**
la fenêtre de tolérance présente de préférence une largeur d'environ +/- 20 degrés par rapport à une longueur de période de 360 degrés des bits de données du signal de données.

4. Dispositif selon la revendication 1,
**caractérisé en ce que**
les moyens utilisent, pour la récupération des bits de données à partir des échantillons calculés ou acquis, des niveaux d'écrêtage d'amplitude qui sont configurés de façon adaptative et dont les valeurs d'amplitude se rapprochent de préférence des amplitudes maximales des échantillons calculés ou acquis.

5. Dispositif selon la revendication 1,
**caractérisé en ce que**
la largeur de la bande de tolérance est configurée de façon adaptative, la largeur de la bande de tolérance se réglant selon la fiabilité d'identification souhaitée et/ou constatée.

6. Dispositif selon la revendication 1,
**caractérisé en ce que**
le signal de données est un signal de télétexte d'un signal vidéo et **en ce que** la fréquence d'échantillonnage à laquelle le signal de télétexte a été échantillonné est couplée à la fréquence de ligne du signal vidéo.
